# EUROPEAN PATENT APPLICATION

(11) **EP 2 474 771 A2**
(43) Date of publication of application: **11.07.2012**
(21) Application number: 12150463.3
(22) Date of filing: 09.01.2012
(51) Int. Cl.: F16L 55/28, G01B 7/13, G01B 5/12

(54) **Apparatus for pipeline inspection**

(30) Priority: 10.01.2011 EP 11150532
(71) Applicant: PII Limited, Northumberland NE23 1WW (GB)
(72) Inventor: Fussell, Leon, Cramlington, Northumberland NE23 1WW (GB); Harvey, Raymond, Cramlington, Northumberland NE23 1WW (GB)
(74) Representative: McWilliams, David John

(57) **Abstract**

A sensor arm (102) has an injection moulded body. One end of the arm (102) is used to mount the arm on a pipeline inspection tool (104). The other end (114) of the arm is spring biased into contact with the internal surface of a pipe wall. The arm (102) is an injection moulded component, e.g. made from Nylon 12. The arm (102) has lightweight and dynamically improved configuration, which reduces the impact of weld bead strikes. The arm (102) includes a recess (130) configured to reduce the likelihood of impact from the biasing spring (108).

## Description

The disclosure relates to apparatus for pipeline inspection, more particularly, but not exclusively, to apparatus for inspection of the internal surface of a fluid pipeline, e.g. in-line inspection of an oil or gas pipeline.

It is known to inspect the inside of a pipeline using an inspection apparatus commonly referred to a pipeline pig. A known pig includes a radial array of sensor arms. In use, an end of each sensor arm is biased into contact with the inner wall of the pipe as the pig is driven along the pipe, in order to carry out an inspection of the inner wall of the pipe. In particular, the sensor arms provide a dimensional inspection of the pipe wall, looking for dents or other defects in the shape of the pipe wall.

Conventional pipelines are constructed from individual sections of pipe, which are interconnected to define a string of pipe sections. Typically, the joint between adjacent pipe sections defines an internal projection in the pipeline, such as a bead formed by welding the two pipe sections together. However, weld beads and other internal projections present an inspection problem, since the sensor arm will often lose contact with the pipe wall when it strikes the projection. Moreover, the sensor arm may reverberate for a period of time after the strike. Hence, inspection data may be lost until such time as the sensor arm regains more permanent travel along the pipe wall.

The disclosure overcomes or mitigates the above-discussed problem, or other disadvantages or problems, associated with known inspection apparatus.

According to one aspect, the disclosure provides apparatus for a pipeline inspection tool, in the form of a sensor arm comprising a body (e.g. of injection moulded construction) having first and second ends, wherein the first end is configured for mounting the arm on a pipeline inspection tool and the second end is configured to receive a contact portion configured for contact with the internal surface of a pipe wall, wherein the body has an elongate section which extends between said first and second ends, said elongate section having an external profile which defines a top surface, a bottom surface and a main web arranged between said top and bottom surfaces, wherein the depth of the main web is greater than the width of the main web.

According to another aspect, the disclosure provides apparatus for pipeline inspection, the apparatus comprising a tool for in-line inspection of a pipeline, wherein the tool includes a sensor arm of the kind set for in the above aspect, i.e. comprising a body (e.g. of injection moulded construction) having first and second ends, wherein the arm is mounted on the tool via said first end and the second end is distal said first end and has a contact portion for contact with the internal surface of a pipe wall, wherein the body has an elongate section which extends between said first and second ends, said elongate section having an external profile which defines a top surface, a bottom surface and a main web arranged between said top and bottom surfaces, wherein the depth of the main web is greater than the width of the main web.

In exemplary embodiments for one or both of the above aspects, the external profile of the elongate section defines first and second side faces, and the distance between said top and bottom surfaces is greater than the distance between the first and second side faces of the elongate section. For example, in exemplary embodiments, the distance between the top and bottom surfaces of the elongate section is at least twice the distance between the side faces of the elongate section.

In exemplary embodiments for one or both of the above aspects, the elongate section includes a recess which extends in a direction between said first and second ends of the body. In exemplary embodiments, the elongate section has a side face and the recess consists of an elongate groove or slot formed in the side face of the elongate section.

According to a further aspect, the disclosure provides apparatus for pipeline inspection comprising a base assembly for connection to an inspection tool, a sensor arm pivotably mounted on said base assembly, and a spring connected between the base assembly and the sensor arm, wherein the spring is arranged to bias the arm towards an extended position, for spring loaded contact between the arm and an internal surface of a pipe along which the tool is travelling, wherein arm has first said first and second ends and defines an elongate section extending between said first and second ends, and wherein the spring has a normal position arranged adjacent said elongate section when the arm is in its fully extended position, and said elongate section includes a recess which extends in a direction between said first and second ends of the body adjacent the normal position of said spring.

In exemplary embodiments of this further aspect, the sensor arm may be of the kind set forth in the other aspects, i.e. comprising a body having first and second ends, wherein the first end is configured for mounting the arm on a pipeline inspection tool and the second end is configured to receive a contact portion for contact with the internal surface of a pipe wall, wherein the body has an elongate section which extends between said first and second ends, said elongate section having an external profile which defines a top surface, a bottom surface and a main web arranged between said top and bottom surfaces, wherein the depth of the main web in cross section is greater than the width of the main web in cross-section.

In exemplary embodiments, the external profile of the elongate section defines first and second side faces, and the distance between said top and bottom surfaces is greater than the distance between the first and second side faces of the elongate section. For example, in exemplary embodiments, the distance between the top and bottom surfaces of the elongate section is at least twice the distance between the side faces of the elongate section.

For exemplary embodiments in accordance with any one of the above aspects, the body may be of injection moulded construction. However, other production techniques may be used in alternative embodiments, e.g. die casting, rotational moulding or shell moulding.

In exemplary embodiments according to any one of the above aspects, the body is of lightweight construction, and may be produced from plastics material, e.g. nylon or nylon 12. In exemplary embodiments, the body is made from nylon 12 with a glass content of up to about 30%.

In exemplary embodiments for any one of the above aspects, the arm includes a contact portion in the form of a contact tip, which is attached at the second end of the arm. In exemplary embodiments, an aperture extends through the second end of the body for connection of the contact portion to the arm, and wherein the contact tip has a tip portion for contact with the pipe wall and a tail portion which extends into said aperture for securing the contact tip to the arm.

In exemplary embodiments, the contact tip has a tip portion having an upper contact surface for contact with a pipe wall, and wherein the periphery of the contact surface defines a leading edge which is inclined or defines a radius to the upper contact surface.

In exemplary embodiments, the contact tip has a tip portion having an upper contact surface for contact with a pipe wall, and wherein the periphery of the contact surface defines a trailing edge which is inclined or defines a radius to the upper contact surface.

In exemplary embodiments for any one of the above aspects, an aperture is formed at the first end of the arm for receiving a pivot pin. A bush may be fitted in the aperture for mating with the pivot pin. In exemplary embodiments, the bush is produced from phosphor bronze. In exemplary embodiments, the bush is an over-moulded component of the arm. In exemplary embodiments, a magnet is fitted to one side of the bush, wherein the magnet provides changing magnetic poles for monitoring displacement of the arm.

In exemplary embodiments for any one of the above aspects, a limit stop is provided on the arm adjacent the first end, for limiting the extension of the arm in use. In exemplary embodiments, the limit stop is an integrally formed projection on one side of the arm.

The accompanying drawings, which are incorporated in and constitute a part of the specification, illustrate one or more embodiments and, together with the description, explain these embodiments. In the drawings:
Figure 1 is a schematic side view of a pipeline inspection apparatus;
Figure 2 is a first side view of a sensor arm for use in the pipeline inspection apparatus of Figure 1;
Figure 3 is a cross-sectional view through the sensor arm of Figure 2;
Figure 4 is a second side view of a sensor arm for use in the pipeline inspection apparatus of Figure 1;
Figure 5 is a schematic side view of a contact tip for use in the pipeline inspection apparatus of Figure 1;
Figure 6 is a schematic side view of a spring for use in the pipeline inspection apparatus of Figure 1;
Figure 7 is a cross-sectional view through the pipeline inspection apparatus of Figure 1; and
Figure 8 is an end view of a bush for use in the pipeline inspection apparatus of Figure 1.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

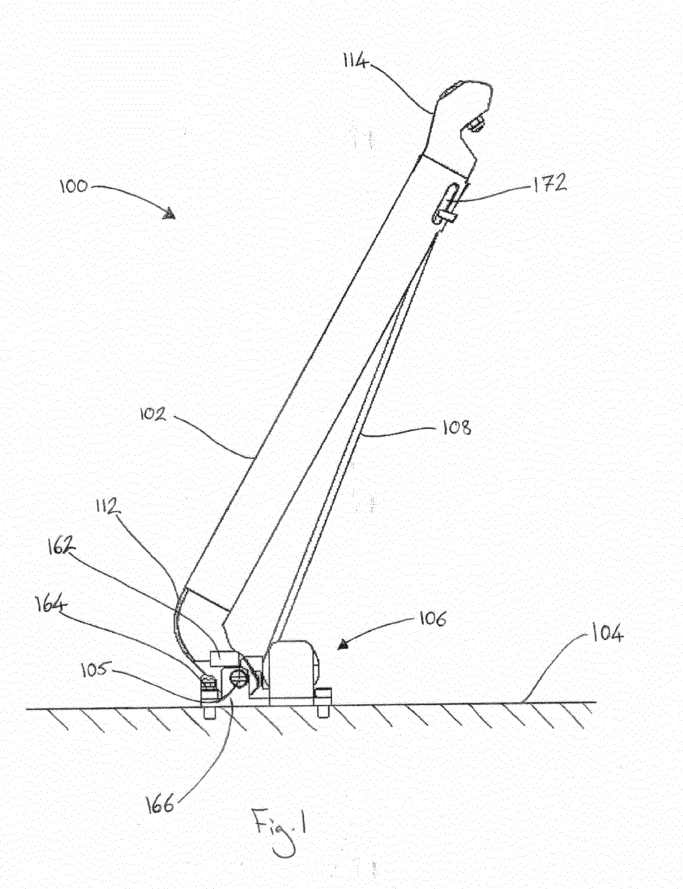

Referring firstly to Figure 1, an apparatus for pipeline inspection is indicated generally at 100. The apparatus 100 includes a sensor arm 102 pivotably mounted on an inspection tool (only part of which is indicated at 104) configured for in-line inspection of pipelines. In general terms, the sensor arm 102 is intended for carrying out a dimensional inspection of the internal wall of a pipeline along which the tool 104 is travelling.

A base assembly 106 is mounted on the tool 104. The base assembly 106 acts as a support for the sensor arm 102. The sensor arm 102 is pivotably connected to the base assembly 106 by a pivot pin 105.

The sensor arm 102 is movable between an extended position (e.g. as shown in Figure 1) and a plurality of deflected positions (e.g. as the arm pivots clockwise as viewed in Figure 1).

A spring 108 (e.g. a torsion spring) is connected between the base assembly 106 and the arm 102. The spring 108 serves to bias the arm 102 towards its extended position, for spring loaded contact with an internal surface of a pipe along which the tool 104 is travelling.

In exemplary embodiments (as will be described in more detail below), limit stops on the sensor arm 102 and the base assembly 106 prevent over extension of the arm 102 beyond the extended position shown in Figure 1.

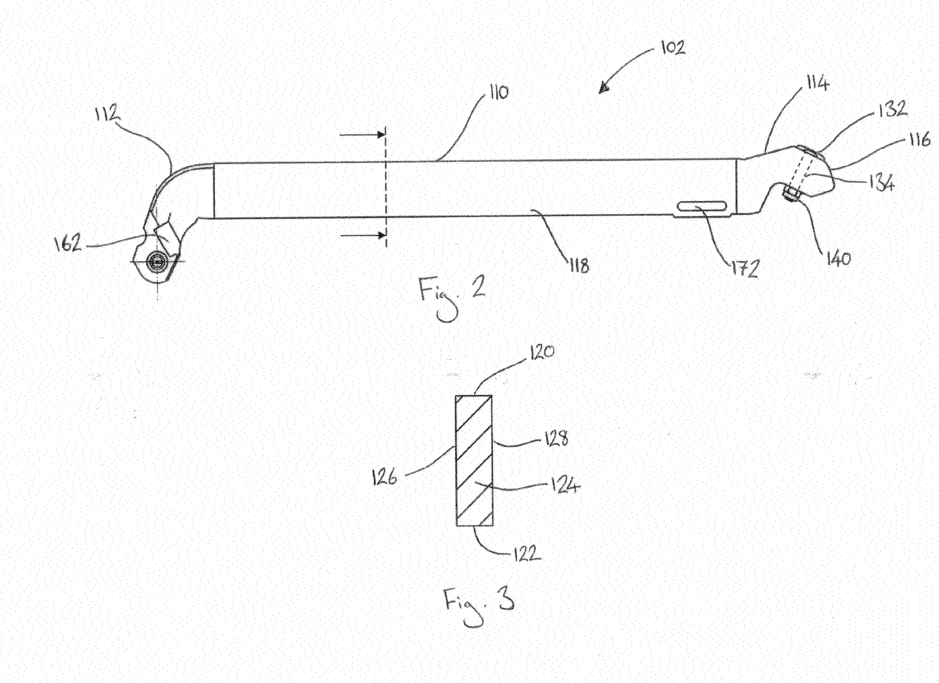

The arm 102 is shown in more detail in Figure 2 and consists of body 110 having first and second ends 112, 114. The first end 112 is configured for mounting the arm 102 on the tool 104, e.g. by connection to the base assembly 106 via pivot pin 105. In this embodiment, the second end 114 defines the distal end 116 of the arm 102, which is intended for contact with an internal wall along which the tool 104 is travelling.

The body 110 has an elongate section 118 which extends between said first and second ends 112, 114. As can be seen in Figure 3, the elongate section 118 has an external profile which defines top and bottom surfaces 120, 122, and a main web 124 extending between said top and bottom surfaces 120, 122. The profile further defines first and second side faces 126, 128 of the elongate section 118.

The main web 124 has a cross-section which is deeper than it is wide. Moreover, the distance between the top and bottom surfaces 120, 122 is greater than the distance between the first and second side faces 126, 128 of the elongate section 118.

As can be seen in Figure 3, the depth of the main web is at least twice the width of the main web. The distance between the top and bottom surfaces of the elongate section is greater than twice the distance between the side faces of the elongate sections.

This configuration has been found to exhibit advantageous dynamic properties, reducing reverberations, flexure and other dynamic effects that occur in the event of a weld bead strike. The second moment of area cross section of the arm has been found to provide optimum stiffness in the 'Y' plane without unduly increasing the mass of the arm.

In exemplary embodiments, the body 110 is of injection moulded construction. Using an injection-moulded process reduces manufacturing costs and lead-time compared to conventional machined components. It also enables the arm 102 to be lightweight, compared with conventional machined arms, e.g. made from aluminium.

However, other production techniques may be used in alternative embodiments, e.g. die casting, rotational moulding or shell moulding.

The body 110 may be of single piece construction, and so can be produced as a straightforward moulding, e.g. in a simple mould cavity.

In exemplary embodiments, the injection moulded body is made from plastics material, e.g. nylon or nylon 12. Nylon 12, in particular, is a lightweight material well suited to the operating conditions associated with in-line inspection of oil and gas pipelines.

In further exemplary embodiments, the injection moulded body is made from nylon 12 having a glass content of up to about 30% by weight. An arm 102 made from this material has been found to exhibit beneficial levels of strength, reduced bending performance and improved impact resistance suitable for the operating conditions associated with in-line inspection techniques, particularly when formed with a configuration of the kind discussed above.

Tests indicate that the lightweight and dynamically improved configuration of arm reduces the impact of a weld bead strike, in terms of the kinetic energy imparted to the arm and the subsequent degree of deflection of the arm away from the wall of a pipe. Moreover, the lightweight and dynamically improved configuration is understood to contribute to the arm settling more quickly into smooth travel with the internal surface of the pipe after a weld bead strike, thereby reducing the loss of inspection data as a result of a weld bead strike.

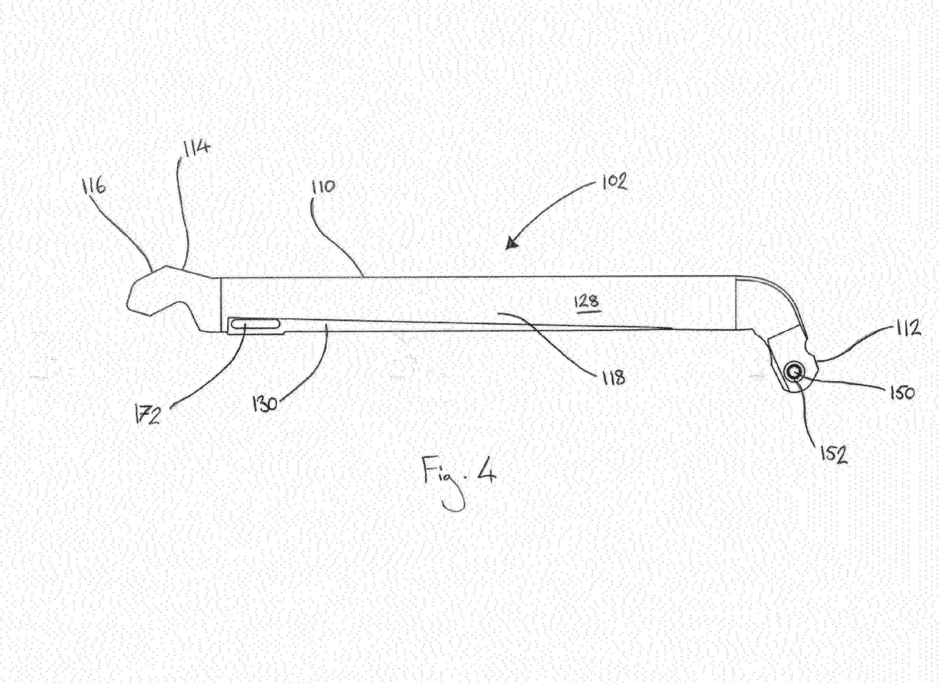

As can be seen in Figure 4, the arm 102 includes a recess 130 which extends in a direction between said first and second ends of the body. The recess 130 is formed in side face 128 of the elongate section 118.

As mentioned above, the arm 102 is biased into its extended position on the tool 104 by the spring 108. During movement of the tool 104 within the pipe, the degree of extension of the arm 102 will change relative to the tool 104 (e.g. if the tool 104 deviates from the central axis of pipe). In the event of a significant change in the degree of extension, e.g. resulting from a weld bead strike, the spring 108 will deflect. Any contact between the deflecting spring 108 and the arm 102 may have a negative effect on the dynamic performance or relative positioning of the arm 102 on the tool 104. The provision of the recess 130 provides a space into which the spring 108 may deflect, thereby reducing the likelihood of significant contact between the deflecting spring 108 and the arm 102. Specifically, the recess reduces the risk of impact between the deflecting spring 108 and the side face 128 of the arm 102.

In exemplary embodiments, the recess 130 consists of an elongate groove or slot formed in the side face 128 of the elongate section 118. Hence, the recess 130 is easy to produce in a simple mould tool.

Referring back to Figure 2, the arm 102 includes a contact tip 132 for contact with an internal surface of a pipe wall. The contact tip 132 is attached at the distal end 116 of the arm 102.

The tip 132 is manufactured from steel, e.g. vacuum hardened and tempered tool steel. The tip 132 prevents wear of the sensor arm 102 and inhibits the frictional heat generated from contact with the pipe wall from melting the sensor arm 102.

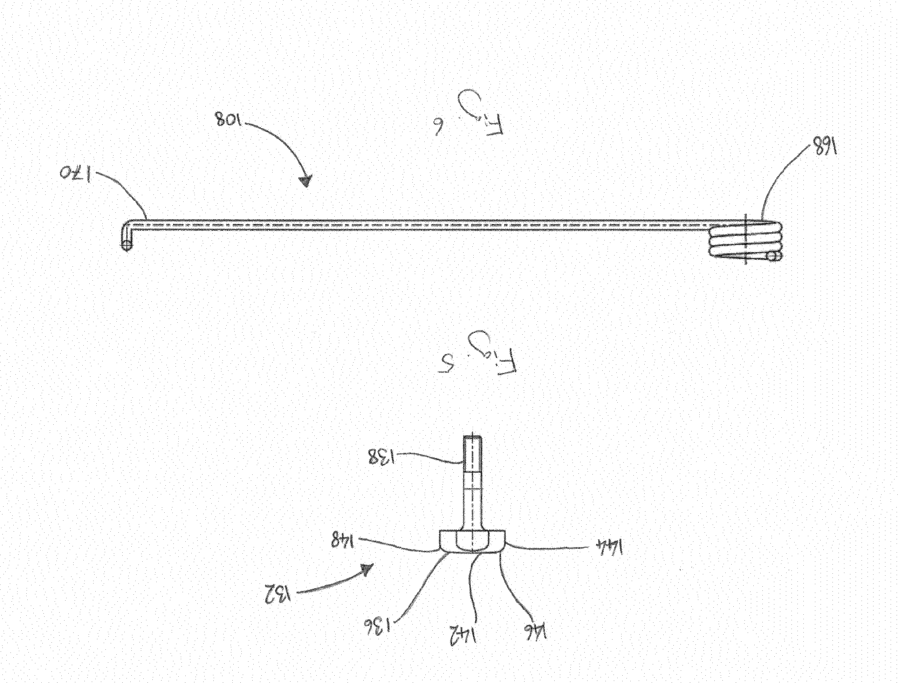

An aperture (indicated by the dotted lines 134) extends through the distal end 116 of the arm 102. As can be seen in Figure 5, the contact tip 132 has a tip portion 136 for contact with the pipe wall and a tail portion 138. The tail portion 138 extends through the aperture 134 and is secured in place by a nut 140.

The tip portion 136 projects from the distal end 116. The tip portion 136 has an upper contact surface 142 for contact with a pipe wall. The contact surface 142 has a periphery 144 which defines a leading edge 146. The leading edge 146 defines a radius to the upper contact surface 142.

The provision of radiused leading edge on the contact tip can reduce the impact of a strike between the contact tip and a weld bead as the tool passes along the pipe, reducing the degree of deflection and wear caused by the impact. In exemplary embodiments, the leading edge may be inclined or chamfered relative to the upper surface 142, providing the same or similar effect.

The periphery 144 of the contact surface 142 also defines a trailing edge 148, which is also inclined, chamfered or defines a radius to the upper contact surface 142. The provision of an inclined or radiused trailing edge on the contact tip can reduce the impact of a strike between the contact tip and a weld bead if the tool is reversed along the pipe, reducing the degree of deflection and wear caused by the impact.

Referring back to Figure 4, an aperture 150 is formed at the first end 112 of the arm 102, for receiving the pivot pin 105. A bush 152 is fitted in the aperture 150, for clearance fit over the pivot pin 105. In exemplary embodiments, the bush 152 is produced from phosphor bronze and may be over-moulded during the injection moulding process for the production. This reduces the number of steps required in the assembly of the apparatus. The use of phosphor bronze provides excellent wear resistance and corrosion resistance.

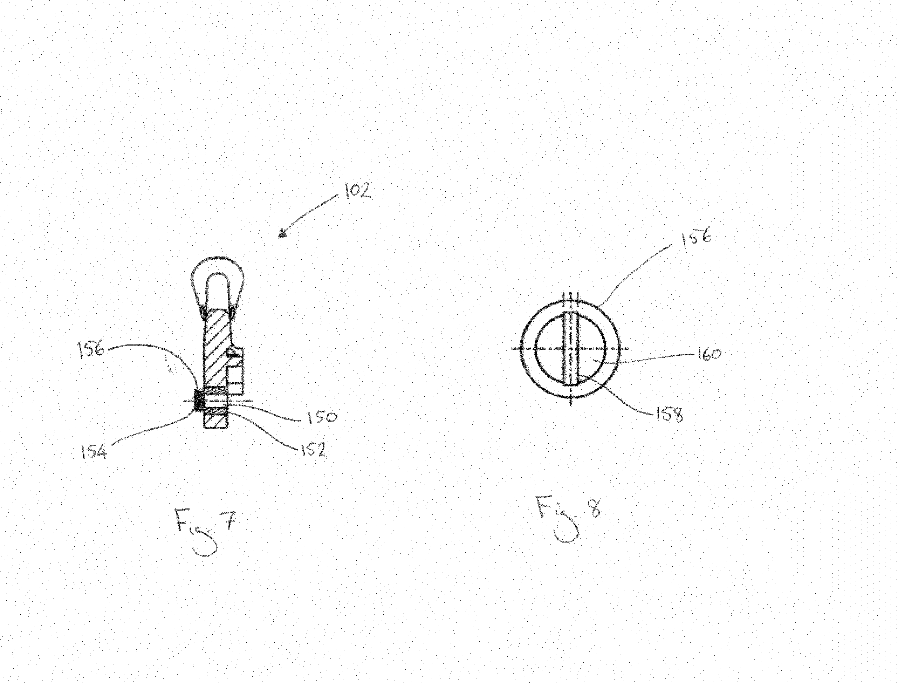

A magnet 154 is fitted to one side of the bush 152 (e.g. as shown in Figure 7). The magnet 154 provides changing magnetic poles that are picked up by a sensor (not shown) on the base assembly 106 as the sensor arm 102 rotates about the pivot point, e.g. in the event of a weld bead strike or other change in internal diameter of the pipe along which the tool 104 is travelling.

In exemplary embodiments, the magnet 154 is fitted into a thin bush 156. e.g. of nylon 12 material, which is then glued to phosphor bronze bush 152. As shown in Figure 8, a slot 158 is provided in the rear face 160 of the bush 156, so that a screw driver or other device can be passed through the bush 152 and into engagement with the bush 156, for correct positioning of the magnet (poles) on the arm 102

Referring back to Figure 1, a limit stop 162 is provided on the arm 102 adjacent the first end 112, for limiting the extension of the arm 102 relative to the base assembly 106. In this embodiment, the limit stop 162 takes the form of a projection on one side of the arm, configured to abut against a limit stop on the base assembly 106, e.g. a part 164 of a support bracket 166 for the pivot pin 105. In exemplary embodiments, the limit stop 162 is integrally formed on the arm 102, e.g. during production of the arm.

An exemplary spring 108 for use in the arrangement of Figure 1 is shown in Figure 6. The spring 108 includes a coiled first end 168 for connection to the base assembly 106 and a distal end 170 for connection to an aperture 172 formed adjacent the second end 114 of the arm 102. The spring 108 is produced from Elgiloy to provide a torsional spring with high yield strength and good corrosion resistance.

In exemplary embodiments, the stiffness of spring (and hence, the load that the spring exerts when biasing the arm into engagement with a pipe wall) is configured to aid the dynamic performance of arm during travel along the pipeline, to reduce the degree of off-lift and the number and/or effect of reverberations induced in the arm as a result of a weld bead strike.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended and are understood to be within the scope of the claims.

## Claims

1. Apparatus for a pipeline inspection tool, in the form of a sensor arm comprising a body having first and second ends, wherein the first end is configured for mounting the arm on a pipeline inspection tool and the second end has a contact portion configured for contact with the internal surface of a pipe wall, wherein the body has an elongate section which extends between said first and second ends, said elongate section having an external profile which defines a top surface, a bottom surface and a main web arranged between said top and bottom surfaces, wherein the depth of the main web in cross section is greater than the width of the main web in cross-section.

2. Apparatus according to claim 1 wherein the arm is of lightweight plastics construction, e.g. produced by injection moulding.

3. Apparatus according to claim 1 wherein the external profile of the elongate section further defines first and second side faces, and the distance between said top and bottom surfaces is greater than the distance between the first and second side faces of the elongate section, e.g. wherein the distance between the top and bottom surfaces of the elongate section is at least twice the distance between the side faces of the elongate section.

4. Apparatus according to claim 1 wherein the elongate section includes a recess which extends in a direction between said first and second ends of the body, e.g. wherein the elongate section has a side face and the recess consists of an elongate groove or slot formed in the side face of the elongate section.

5. Apparatus according to claim 1 wherein the contact portion is in the form of a contact tip, which is attached at the second end of the arm.

6. Apparatus according to claim 5 wherein an aperture extends through the second end of the body for connection of the contact portion to the arm, and wherein the contact tip has a tip portion for contact with the pipe wall and a tail portion which extends into said aperture for securing the contact tip to the arm.

7. Apparatus according to claim 5 wherein the contact tip has a tip portion having an upper contact surface for contact with a pipe wall, and wherein the periphery of the contact surface defines a leading edge which is inclined or defines a radius to the upper contact surface; or wherein the contact tip has a tip portion having an upper contact surface for contact with a pipe wall, and wherein the periphery of the contact surface defines a trailing edge which is inclined or defines a radius to the upper contact surface.

8. Apparatus according to claim 1 wherein an aperture is formed at the first end of the arm for receiving a pivot pin, wherein a bush is fitted in the aperture for mating with the pivot pin.

9. Apparatus according to claim 8 wherein the bush is produced from phosphor bronze.

10. Apparatus according to claim 9 wherein the bush is an over-moulded component of the arm.

11. Apparatus according to claim 8 wherein a magnet is fitted to one side of the bush, wherein the magnet provides changing magnetic poles for monitoring displacement of the arm.

12. Apparatus according to claim 1 wherein a limit stop is provided on the arm adjacent the first end, for limiting the extension of the arm in use.

13. Apparatus according to claim 12 wherein the limit stop is an integrally formed projection on one side of the arm.

14. Apparatus according to claim 1 wherein the body comprises nylon 12 having a glass content of up to about 30% by weight.

15. Apparatus for pipeline inspection comprising a base assembly for connection to an inspection tool, a sensor arm pivotably mounted on said base assembly, and a spring connected between the base assembly and the sensor arm, wherein the spring is arranged to bias the arm towards an extended position for spring loaded contact with an internal surface of a pipe along which the tool is travelling, wherein arm has first said first and second ends and defines an elongate section extending between said first and second ends, and wherein the spring has a normal position arranged adjacent said elongate section when the arm is in its fully extended position, and said elongate section includes a recess which extends in a direction between said first and second ends of the body adjacent the normal position of said spring.

16. Apparatus according to claim 15 wherein the sensor arm comprises a body having first and second ends, wherein the first end is configured for mounting the arm on a pipeline inspection tool and the second end has a contact portion for contact with the internal surface of a pipe wall, wherein the body has an elongate section which extends between said first and second ends, said elongate section having an external profile which defines a top surface, a bottom surface and a main web arranged between said top and bottom surfaces, wherein the depth of the main web in cross section is greater than the width of the main web in cross-section.

17. Apparatus according to claim 15 wherein the arm is of lightweight plastics construction, e.g. produced by injection moulding.
